# EUROPEAN PATENT SPECIFICATION

(11) **EP 3 187 786 B1**
(45) Date of publication and mention of the grant of the patent: **13.02.2019**
(21) Application number: 16002746.2
(22) Date of filing: 29.12.2016
(51) Int. Cl.: F24C 13/00, F24D 17/00

(54) **COOKING STOVE WITH HEAT RECOVERY SYSTEM**
KOCHHERD MIT WÄRMERÜCKGEWINNUNGSSYSTEM
CUISINIÈRE AVEC SYSTÈME DE RÉCUPÉRATION DE CHALEUR

(30) Priority: 29.12.2015 IT UB20159431
(43) Date of publication of application: 05.07.2017
(73) Proprietor: Recchia, Francesco, 10095 Grugliasco (TO) (IT); Selvaggio, Michelangelo, 10146 Torino (TO) (IT)
(72) Inventor: Recchia, Francesco, I-10095 Grugliasco (TO) (IT)
(74) Representative: Aprà, Mario

(56) References cited:
- EP-A1- 0 114 578
- CH-A- 206 941
- CN-U- 204 665 372
- FR-A- 1 141 174
- GB-A- 2 172 698
- JP-U- S5 126 536
- US-A- 4 483 310

## Description

The present invention relates to a cooking stove with heat recovery system.

Document US7,925,143B1 describes a cooking stove with heat recovery system, comprising in particular an apparatus to heat potable water on board a recreational watercraft. Said apparatus comprises a metal enclosure placed on top of a burner of a conventional galley stove. Potable water is circulated through a tubing unit mounted within the enclosure by a pump. The heated potable water is then transferred to a potable water holding tank through a check valve which prevents the reverse flow of the heated water.

Furthermore, the above-mentioned known apparatus, which is applied to a cooking stove, has several significant drawbacks.

First and foremost, the above-mentioned known apparatus does not permit the recovery of heat which, when the stove burner is in operation, is reflected, by the pot or similar placed on top of the burner, towards the surface immediately below the stove burner. As a result, the thermal energy released by the burner flame is significantly dissipated into the surrounding atmosphere, without heating the pot. This results in ecological damage, environmental pollution, and also economic damage, in terms of thermal energy wasted.

Furthermore, said known apparatus is placed directly on top of the stove where it directly receives and makes use of the heat of the flame generated by the stove burner. Therefore, even if a pot or similar is placed on top of said known apparatus, the pot or similar only receives a residual amount of heat. This fact severely limits the use of said known apparatus when applied to cooking stoves, the main aim of which is to transfer heat directly from the flame of the burner to the pot or similar, for fast, correct cooking of food.

CN 2014 665 372 U discloses a cooking stove with heat recovery system, having at least one heating means consisting of a gas burner, a radiant electric plate or an inductive electric plate for cooking food comprising heat collector means arranged around and, at least in part, underneath said at least one heating means of said stove, and which comprise at least one coil means having a thermal fluid-tight inlet and outlet, with the inlet hydraulically connected in a fluid-tight manner to first hydraulic circuit means and with the outlet connected to second hydraulic circuit means, which are hydraulically connected with respect to at least one thermal fluid storage container, which is in turn hydraulically connected, on one side, with respect to a duct for the inflow of fluid coming from a fluid distribution network and, on the other side, with respect to a first duct for the outflow of fluid, hydraulically branched towards a fluid consumer, through solenoid valve means far controlling the flow of fluid delivered from said at least one container and in that it further comprises electrical/electronic thermostat means, associated with said at least one storage container and electrically connected to said solenoid valve control means.

An object of the present invention is to provide a cooking stove with a heat recovery system, that makes it possible to recover a significant part of the thermal energy dissipated by the stove during operation, and in particular also to recover at least part of the heat that, when the stove burner is in operation, is reflected towards the surface immediately below the stove burner, and to store the thermal energy recovered for uses other than for cooking food, even at a later time.

Another object of the present invention is to provide a cooking stove with heat recovery system, that does not significantly limit use of the stove when transferring heat from the burner flame directly to the pot or similar on top, for fast, correct cooking of food.

A further object of the present invention is to provide a cooking stove with heat recovery system, which has an essentially simple structure, is easy to use and maintain, and is essentially low in cost.

Given these objects, the present invention provides a cooking stove with heat recovery system, the essential characteristic of which forms the object of claim 1.

Further advantageous characteristics are described in the dependent claims.

More specifically, according to the present invention, said cooking stove with heat recovery system, having at least one heating means consisting of a gas burner, a radiant electric plate or an inductive electric plate for cooking food, is characterized in that it comprises heat collector means arranged around and, at least in part, underneath said at least one heating means of said stove, and which comprise at least one coil means having a thermal fluid-tight inlet and outlet, with the inlet hydraulically connected in a fluid-tight manner to first hydraulic circuit means and with the outlet connected to second hydraulic circuit means, which are hydraulically connected with respect to at least one thermal fluid storage container, which is in turn hydraulically connected, on one side, with respect to a duct for the inflow of fluid coming from a fluid distribution network and, on the other side, with respect to a first duct for the outflow of fluid, hydraulically branched towards a fluid consumer, through solenoid valve means for controlling the flow of fluid delivered from said at least one container, and in that it further comprises electrical/electronic thermostat means, associated with said at least one storage container and electrically connected to said solenoid valve control means, said thermostat means being set to react at a predetermined maximum temperature value of the fluid contained in said at least one container, so that, when the fluid in said at least one storage container reaches said predetermined maximum temperature value set in said thermostat means, they cause the opening of said solenoid valve means, which enable the outflow of thermal fluid through said first duct for the outflow of fluid, hydraulically branched towards said consumer.

According to an advantageous embodiment of the present invention, said at least one coil means of said collector means is arranged inside or underneath the surface of the stove from which said at least one heating means extends upwards.

Furthermore, advantageously, said at least one coil means of said collector means is hydraulically connected with respect to at least one rigid tubular support placed around said at least one heating means and forming a support for containers of food to be cooked on said stove. Said cooking stove with heat recovery system, advantageously, comprises a cabinet structure, in which said at least one heating means extends above an upper surface of said stove and said heat collector means are arranged on said upper surface, respectively at least in part underneath said upper surface, and said at least one thermal fluid storage container is housed in said cabinet structure.

Furthermore, said cooking stove with heat recovery system, according to the invention, comprises at least two thermal fluid storage containers connected to one another in series and housed in said cabinet structure. According to the invention, said heat collector means are contained in a fluid-tight container, wherein a pneumatic vacuum is formed and which is placed around and, at least in part, underneath said at least one heating means of said stove.

Furthermore, said fluid-tight container comprises an air-tight outer shell, made of good heat-conducting material, and an internal support plate, made of an insulating or heat-reflecting material, on which said heat collector means rest.

In a variant, said heat collector means comprise a fluid-tight thermal fluid container having a thermal fluid-tight inlet and outlet, with the inlet hydraulically connected in a fluid-tight manner with respect to first hydraulic circuit means, and with the outlet connected with respect to second hydraulic circuit means, said fluid-tight container having at least one fluid-tight opening, placed around or underneath said at least one heating means of said stove.

Other characteristics and advantages of the invention will be apparent from the following detailed description of two embodiments of the invention, with reference to the figures shown in the accompanying drawing, which shows important details for the invention and for the claims. The characteristics illustrated here must not necessarily be taken to be shown to scale, but rather are represented in such a way that the particular features of the invention are clearly highlighted. The different characteristics may be produced singly or in any combination thereof, as variants of the invention.

In the accompanying drawings:
- Figure 1 shows a schematic and partial overhead plan view of the cooking stove with heat recovery system, according to a first example of an embodiment of the present invention;
- Figure 2 shows a perspective, schematic view of the cooking stove with heat recovery system, according to a second example of an embodiment of the present invention;

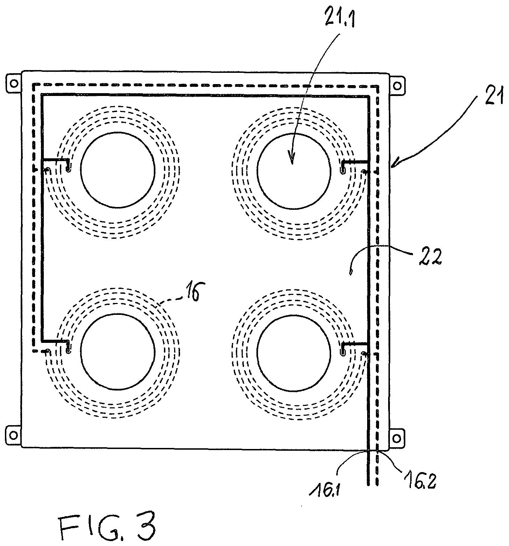

- Figure 3 shows an overhead plan schematic view, in a different scale, of heat collector means for a cooking stove according to the present invention;

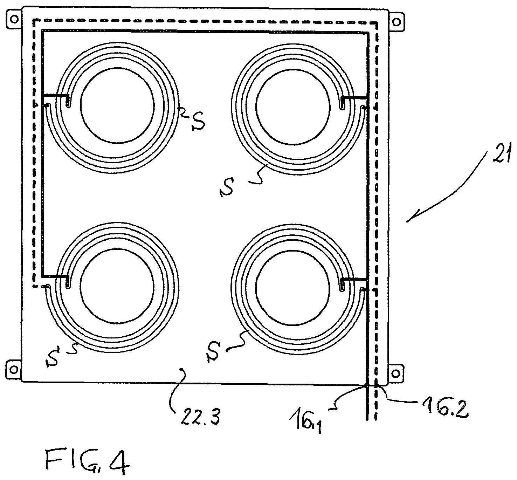

- Figure 4 shows a view similar to that shown in Figure 3, but wherein an upper part of said heat collector means is removed for illustrative clarity;

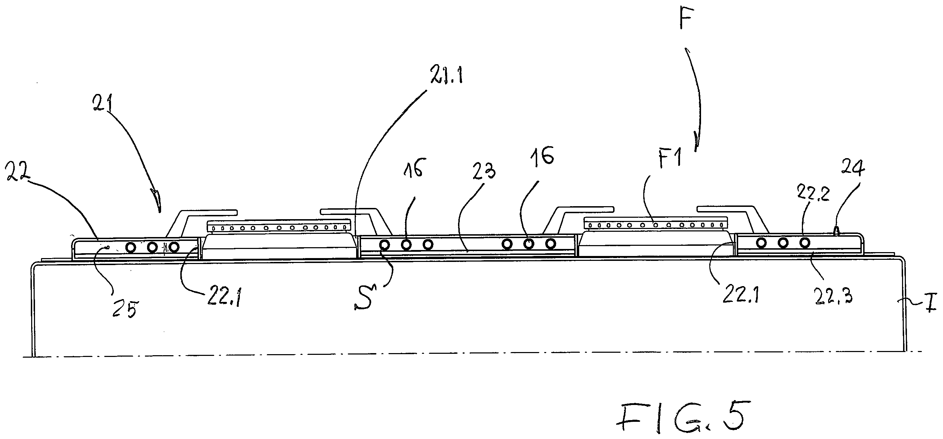

- Figure 5 shows a schematic, vertical cross-section view, on a larger scale, of a cooking stove with gas burners, provided with heat collector means according to Figures 3 and 4.

### First example of an embodiment

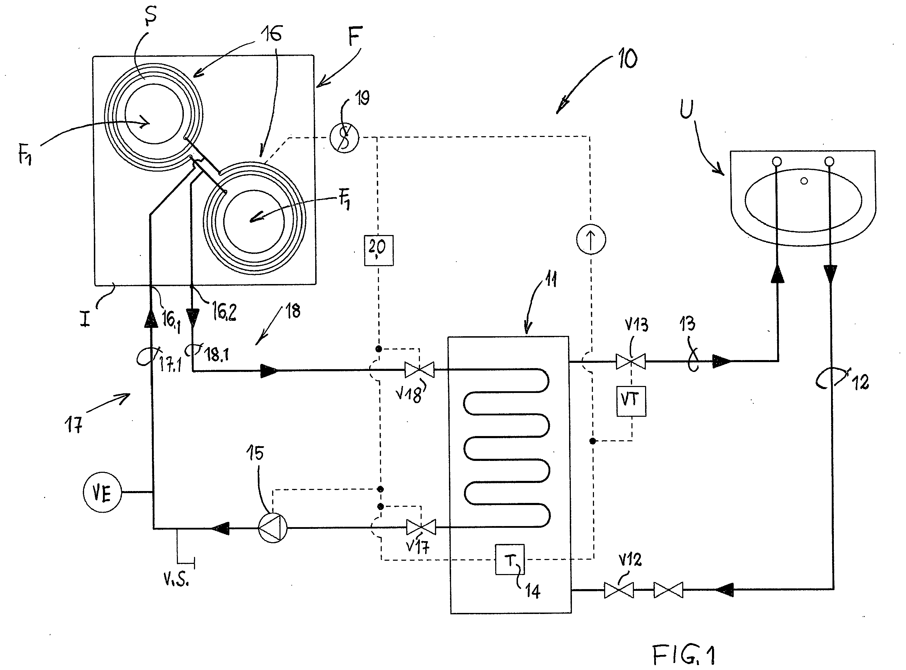

With particular reference to Figure 1, the letter F is used to indicate a stove with a heat recovery system 10, according to the invention, which has two heating means F1, each consisting, in the present example, of a gas burner for cooking food.

In a variant, each heating means may consist of a radiant electric plate or an inductive electric plate, or even a cooking stove heated using one of the above-mentioned devices.

Said system 10 comprises a thermal fluid storage container 11, such as a conventional holding tank for a water heater or similar.

The expression "thermal fluid" refers to a fluid that stores and transports heat. Depending on the uses of the system according to the invention, this fluid may consist of mains water (as in the example shown), mixtures of propylene glycol and water, and similar.

Said container 11 is hydraulically connected, on one side, with respect to a duct 12 for the inflow of fluid coming from a fluid distribution network and, on the other side, with respect to a first duct 13 for the outflow of fluid, hydraulically branched towards a fluid consumer U, through solenoid valve means V13 for controlling the flow of fluid delivered from said at least one container 11.

In this example, said fluid consumer U comprises a thermal water delivery faucet of a sink or bath or similar.

Said system 10 also comprises electrical/electronic thermostat means 14, associated with said at least one storage container 11 and electrically connected to said solenoid valve control means V13. Said thermostat means 14 are set, as in a conventional water heater, to react at a pre-determined maximum temperature value of the fluid contained in the container 11. Said predetermined maximum temperature value may be 55°C, for example.

Said system 10 comprises thermal fluid heat collector means 16, having a fluid inlet 16.1 and a fluid outlet 16.2. In the example shown, said heat collector means 16 comprise a pair of coils S, hydraulically connected in series with one another, so that the inflow of fluid 16.1 is associated with the coil S upstream, in the direction of fluid flow (as will become more apparent later) and the outflow of fluid 16.2 is associated with the coil S downstream. Furthermore, said two coils S are each placed in the proximity of a respective gas burner F1, surrounding said burner.

Said system 10 is also provided with first hydraulic circuit means 17, comprising a second duct 17.1 for the outflow of fluid from said container 11, branched in a fluid-tight manner with respect to said fluid inlet 16.1 of said heat collector means 16.

Electrical pump means 15 for thermal fluid circulation are hydraulically connected with respect to said first hydraulic circuit means 17. Said pump means 15 are already known and are therefore not described or illustrated further hereafter.

Second hydraulic circuit means 18 of said system 10 comprise a duct 18.1 for supplying fluid to said container 11, said duct being branched in a fluid-tight manner from said fluid outlet 16.2 of said heat collector means 16.

Electronic temperature probe means 19 are associated with said heat collector means 16 and detect the temperature of the fluid in said heat collector means 16, in particular in at least one of said coils S. Said temperature probe means 19 are already known and are therefore not described or illustrated further hereafter.

Said system 10 further comprises electronic means 20 for controlling the operation of said pump means 15. Said control means 20 are electrically connected, on one side, with respect to said electronic temperature probe means 19 and, on the other side, with respect to said pump means 15, so as to determine the operating status of said pump means 15 only when said temperature probe means 19 detect a temperature value above a preset minimum temperature value of the thermal fluid in said heat collector means 16. In the example shown, said preset minimum temperature value of the thermal fluid is 30°C, for example.

Said electrical/electronic control means 20 comprise, by way of example and in a manner already known and therefore not described or illustrated further hereafter, a conventional electronic control unit for regulating heating systems using thermal water circulation or similar.

It will be noted that said solenoid valve control means V13, said thermostat means 14, said pump means 15, said temperature probe means 19 and said control means 20 are connected in an electrically powered circuit.

### Operation

The heat generated and dissipated from said two gas stoves F1 heats the thermal fluid inside said heat collector means 16, namely the two coils S connected in series with one another. Said temperature probe means 19, when they detect a temperature value above said minimum temperature value (30°C), while said solenoid valve control means V13 are in position to shut off the flow of thermal fluid, determine the operating status of said pump means 15, which circulate the thermal fluid, coming through said first circuit means 17, from said heat collector means 16 to said storage container 11, through said second circuit means 18, until the fluid in said container 11 reaches said predetermined maximum temperature value (55°C) set in said thermostat means 14. The latter react to said maximum temperature value and cause opening of said solenoid valve means V13, which enable -- through the action of said pump means 15outflow of thermal fluid through said first duct 13 for the outflow of fluid, hydraulically branched towards said consumer U.

It will be noted that said pump means 15 are automatically de-activated, by means of said control means 20, when said temperature probe means 19 detect a temperature below or equal to said preset minimum temperature value (30°C) of the thermal fluid in said collector means 16. Consequently, all functions of the various parts of the system are restored to their initial conditions.

Furthermore, the system 10 comprises un expansion tank VE, hydraulically connected with respect to said first hydraulic circuit means 17. Therefore, thanks to said expansion tank VE, if the thermal fluid is not discharged through consumer U, the temperature of the fluid can increase in the system 10 even beyond said value of 55°C.

Safety valve means VS nevertheless ensure that the system 10 is discharged beyond a pre-determined operating pressure.

It will be noted that said heat collector means are arranged, depending on construction choices and possibilities, substantially in the plane of the corresponding heating means and below the corresponding heating means.

Regardless of the relative level at which said heat collector means are positioned, they are arranged around the corresponding heating means, in contact or out of contact therewith, depending on construction choices and possibilities.

### Second example of an embodiment

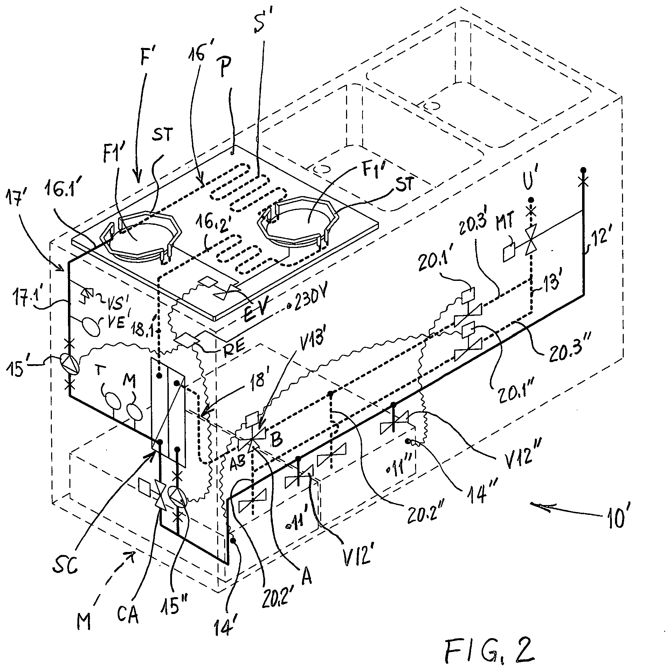

Figure 2 shows, by way of example, an embodiment of the cooking stove, hereafter indicated by F', with a heat recovery system, hereafter indicated by 10', according to the invention. In particular, and as will become more apparent later, said system 10' comprises two thermal fluid storage containers.

In said Figure 2, and in general in the present description, the parts of the system corresponding with one another in the first and second embodiments are indicated using the same references, the difference being that the parts of the system shown in Figure 2 are indicated with references including a single or double apostrophe, for reasons of explanatory clarity.

Parts that are similar in both systems shown in Figures 1 and 2 are not described again, since the description provided above is considered sufficient.

In the present embodiment of the invention, said cooking stove F' with heat recovery system 10' comprises a cabinet structure M, for example parallelepiped in shape, in which two heating means F1' extend above an upper surface P of said stove F'. In particular, the heat collector means 16', S' are arranged in correspondence with said upper surface P and, at least in part, underneath said upper surface P, while two thermal fluid storage containers 11', 11" are housed in the bottom part of said cabinet structure M. In particular, said two thermal fluid storage containers 11', 11" connected to one another in series, as will become more apparent from the following description.

It will be noted that the system 10' begins operation when a solenoid valve EV of the stove F' allows the passage of gas towards the burners F1' (or, for an electric stove, when said solenoid valve allows the passage of electrical current in the corresponding power circuit of the heating plates).

Said containers 11', 11" are also hydraulically connected, upstream in the direction of flow of the thermal fluid, with respect to a duct 12' for the inflow of fluid coming from a fluid distribution network and, downstream, with respect to a first duct 13' for the outflow of fluid, hydraulically branched toward a fluid consumer U'.

Said system 10' further comprises respective electrical/electronic thermostat means 14', 14", associated with each of said storage containers 11', 11" and each set to react at a predetermined maximum temperature value of the fluid contained in the corresponding storage container 11', 11". In particular, in said thermostat means 14' associated with the container 11' upstream, a maximum temperature value (for example 55°C) is set that is lower than the maximum temperature value (for example 60°C) set in said thermostat means 14" associated with the container 11" downstream.

Said system 10 further comprises flow control solenoid valve means, including a flow diverter solenoid valve V13', hydraulically connected with an inlet AB with respect to said second hydraulic circuit means, hereafter indicated by 18', and with the outlets, A and B respectively, of each of said storage containers 11', 11", through corresponding supply ducts 20.2', 20.2". Said flow diverter solenoid valve V13' electrically connected with respect to said thermostat means 14' associated with the storage container 11' upstream.

Said flow control solenoid valve means also include respective flow shut-off solenoid valves 20.1', 20.1", one for each of said containers 11', 11", arranged downstream of said flow diverter valve V13' and each electrically connected with a respective said thermostat means 14', 14" associated with said storage containers 11', 11".

It will be noted that said flow shut-off solenoid valves 20.1', 20.1" are hydraulically connected, downstream, with respective ducts 20.3', 20.3" for the outflow of fluid from said containers 11', 11", ducts of which said solenoid valves normally shut off the flow of fluid. Said ducts 20.3', 20.3" flowing into said first duct for the outflow of fluid, here indicated by 13'.

### Operation

When said pump means 15' circulate fluid, as explained above, coming through said first circuit means, here indicated by 17', from said heat collector means, indicated by 16', through said second circuit means 18' to a heat exchanger SC, wherein a heat exchange takes place between the thermal fluids circulating in a primary circuit, 17' and C', and a secondary circuit 18' respectively. From said secondary circuit 18' the heated thermal fluid flows to said flow diverter solenoid valve V13' -- while the temperature of the fluid in said containers 11', 11" is below the maximum value set in the respective thermostat means 14', 14" (for example 55°C and 60°C, respectively) --, said flow diverter valve V13' first directs, through a first fluid outlet A, the flow of fluid to the container 11' upstream in said plurality of containers 11', 11", until the temperature of the fluid in said container 11' exceeds said predetermined maximum temperature value (55°C) set in the respective thermostat means 14'. The latter, once the set temperature has been exceeded, automatically cause the closure of said first outlet A and the opening of a second outlet B of said diverter solenoid valve V13', second outlet B that is hydraulically connected with respect to the subsequent container 11" downstream in said plurality of containers 11', 11", while said thermostat means 14' also cause the opening of the flow shut-off solenoid valve 20.1" through the corresponding duct 20.3" for the outflow of fluid from said first container 11'.

As will be understood from the above, when the temperature of the fluid in said container upstream 11' exceeds said predetermined maximum temperature value of 55°C set in the respective thermostat means 14', from one side the thermal fluid can flow, through the ducts 20.3" and 13', towards the consumer U' and, on the other side, the thermal fluid that does not flow through said consumer U' is channeled through the duct 20.2" and collected in the downstream container 11".

When the thermal fluid in said downstream container 11" exceeds said predetermined maximum temperature value of 60°C set in the respective thermostat means 14", the latter cause the opening of flow shut-off solenoid valve 20.1' through the corresponding duct 20.3' for the outflow of fluid from said additional container 11" towards said consumer U', through said duct 13'.

In the event that the additional storage containers are hydraulically connected in series, downstream of said container 11", the same process will take place in sequence for every subsequent container of said plurality of containers, downstream in the direction of fluid flow, when the temperature in said subsequent container exceeds said predetermined maximum temperature value set in the respective thermostat means.

As safety means, the system 10' is also provided with an expansion tank VE' and safety valve means VS'.

Furthermore, the system 10' comprises relay means RE that are electrically energized by a thermocouple, which keeps open the gas duct to the burners F1'. Said relay means RE, when energized, activate the electric pumps 15' (primary circuit with respect to the heat exchanger SC) e 15" (secondary circuit with respect to the heat exchanger SC) respectively.

It will also be noted that downstream of said first duct 13' there are provided thermostatic mixer valve means MT, which automatically mix cold water coming from 12' with hot water coming from 20.3' / 20.3", based on a pre-set temperature value (for example, 45°C).

To restore the system's initial operating conditions, please refer to the description given for the first embodiment.

Furthermore, the system 10' is provided with valve means CA for the automatic charging of said first circuit branched to the heat exchanger SC.

Furthermore, advantageously, said coil means S' of said collector means 16' are each hydraulically connected with a respective rigid tubular support ST placed around a corresponding heating means F1' and forming a support for containers of food to be cooked on said stove, and passed through by the thermal fluid in the system 10'.

The structure of the heat collector means 16, 16' is further described with reference also to the other figures in the drawing.

According to the embodiment shown, said heat collector means 16, 16' with coils S, S' are contained in a fluid-tight container 21, for example an essentially box-like body, for example resting to the side of and/or underneath the burners F1, F1' on the surface, for example P, of the stove F, F'.

Advantageously, a pneumatic vacuum is formed in said fluid-tight container 21 and, for every heating means F1, F1' of said stove F, F', it is provided with a corresponding fluid-tight through-hole 21.1, which wraps around said heating means, with or without contact.

It will be noted that said fluid-tight container 21 is provided with check valve means 24 for the pneumatic connection of a vacuum pump.

Preferably, said fluid-tight container 21 comprises an outer shell 22, enclosing an air-tight inner chamber 25 and made of good heat-conducting material, for example copper or similar, and an internal support plate 22.3, made of an insulating or heat-reflecting material, for example aluminum of similar. Said heat collector means 16, 16', in the form of coils S, S' of metal pipe 22.2, rest on said internal support plate 22.3.

In a variant not shown, said heat collector means comprise a fluid-tight container, for example an essentially box-like body, having a thermal fluid-tight inlet and outlet, and with the inlet hydraulically connected in a fluid-tight manner to first hydraulic circuit means, and with the outlet connected to second hydraulic circuit means. Furthermore, in said fluid-tight container there is provided, for every heating means of said stove, a corresponding fluid-tight through-hole, which wraps around said heating means, with or without contact.

According to a further variant not shown, said heat collector means comprise a fluid-tight rigid tubular structure, wherein said thermal fluid flows and which provides a support per containers of food to be cooked on said stove.

The cooking stove according to the invention can also be used in the case of a cooking oven, comprising a chamber heated by a gas burner or electrical elements or similar. In this case, the heat collector means are placed inside said chamber and/or outside the chamber, depending on construction choices and possibilities, the rest of the system remaining unchanged.

As will be apparent from the above description, said cooking stove with heat recovery system, according to the invention, achieves the objects set out in the introduction simply and effectively.

In particular, the present invention provides a cooking stove with heat recovery system, which makes it possible to recover a significant part of the thermal energy that, during operation of the stove burner, is reflected towards the cooking surface of the stove, and to store the thermal energy recovered for uses other than for cooking food, even at a later time.

Furthermore, the present invention provides a cooking stove with heat recovery system, that does not in any way limit use of the stove when transferring heat from the burner flame directly to the pot or similar on top of the burner, for fast, correct cooking of food.

Furthermore, said cooking stove with heat recovery system as mentioned has an essentially simple structure, is easy to use and maintain, and is essentially low in cost.

## Claims

1. Cooking stove (F, F') with heat recovery system (10, 10'), having at least one heating means (F1, F1') consisting of a gas burner, a radiant electric plate or an inductive electric plate for cooking food, comprising heat collector means (16, S, 16', S') and which comprise at least one coil means (S, S') having a thermal fluid-tight inlet (16.1, 16.1') and outlet (16.2, 16.2'), with the inlet hydraulically connected in a fluid-tight manner to first hydraulic circuit means (17, 17.1, 17', 17.1') and with the outlet connected to second hydraulic circuit means (18, 18.1, 18', 18.1'), which are hydraulically connected with respect to at least one thermal fluid storage container (11, 11', 11"), which is in turn hydraulically connected, on one side, with respect to a duct (12, 12') for the inflow of fluid coming from a fluid distribution network and, on the other side, with respect to a first duct (13, 13') for the outflow of fluid, hydraulically branched towards a fluid consumer (U, U'), through solenoid valve means (V13, V13', 20.1', 20.1") for controlling the flow of fluid delivered from said at least one container (11, 11', 11"),
and comprising electrical/electronic thermostat means (14, 14', 14"), associated with said at least one storage container (11, 11', 11") and electrically connected to said solenoid valve control means (V13, V13', 20.1', 20.1"), **characterized in that** said thermostat means being set to react at a predetermined maximum temperature value of the fluid contained in said at least one container (11, 11', 11"),
so that, when the fluid in said at least one container (11, 11', 11") reaches said predetermined maximum temperature value set in said thermostat means (14, 14', 14"), they cause the opening of said solenoid valve means (V13, V13', 20.1', 20.1"), which enable the outflow of thermal fluid through said first duct (13, 13') for the outflow of fluid, hydraulically branched towards said consumer (U, U'), said heat collector means (16, S, 16', S') are arranged around and, at least in part, underneath said at least one heating means (F1, F1') of said stove (F, F') and are contained in a fluid-tight container (21), wherein a pneumatic vacuum is formed and which is placed around respectively, at least in part, underneath said at least one heating means (F1, F1') of said stove (F, F'), and
**in that** said fluid-tight container (21) comprises an air-tight outer shell (22), made of good heat-conducting material, and an internal support plate (22.3), made of an insulating or heat-reflecting material, on which said heat collector means (16, S, 16', S') rest.

2. Cooking stove (F, F') with heat recovery system (10, 10') according to claim 1, comprising a cabinet structure (M) in which said at least one heating means (F1, F1') extends above an upper surface (P) of said stove (F, F'), **characterized in that** said heat collector means (16, S, 16', S') are arranged on said upper surface (P), respectively at least in part underneath said upper surface (P), **and in that** said at least one thermal fluid storage container (11, 11', 11") is housed in said cabinet structure (M).

3. Cooking stove (F, F') with heat recovery system (10, 10') according to claim 2, **characterized in that** comprises at least two thermal fluid storage containers (11, 11', 11") connected to one another in series and housed in said cabinet structure (M).

4. Cooking stove (F, F') with heat recovery system (10, 10') according to any of the claims from 1 to 3, **characterized in that** said heat collector means comprise a fluid-tight fluid container having a thermal fluid-tight inlet and outlet and with the inlet hydraulically connected in a fluid-tight manner with respect to said first hydraulic circuit means, and with the outlet connected with respect to said second hydraulic circuit means, said container having at least one fluid-tight opening, placed around or underneath said at least one heating means of said stove.

5. Cooking stove (F') with heat recovery system (10') according to any of the previous claims, **characterized in that** said coil means (S') of said collector means (16') are each hydraulically connected with a respective rigid tubular support (ST) placed around a corresponding heating means (F1') and forming a support for containers of food to be cooked on said stove, and passed through by the thermal fluid in the system (10').

6. Cooking stove (F, F') with heat recovery system (10, 10') according to any of the claims from 1 to 3, **characterized in that** it comprises:
- at least one container (11, 11', 11") for storing thermal fluid hydraulically connected, on one side, with respect to a duct (12, 12') for the inflow of fluid coming from a fluid distribution network and, on the other side, with respect to a first duct (13, 13') for the outflow of fluid, hydraulically branched towards a fluid consumer (U, U') through solenoid valve means (V13, V13', 20.1', 20.1") for controlling the flow of fluid delivered from said at least one container (11, 11', 11"),
- electrical/electronic thermostat means (14, 14', 14"), associated with said at least one storage container (11, 11', 11") and electrically connected to said solenoid valve control means (V13, V13', 20.1', 20.1"), said thermostat means being set to react at a predetermined maximum temperature value of the fluid contained in said at least one container (11, 11', 11"),
- thermal fluid heat collector means (16, 16') having a fluid inlet (16.1, 16.1') and a fluid outlet (16.2, 16.2') and arranged in contact, respectively in proximity of said at least one heating means (F1, F1'),
- first hydraulic circuit means (17, 17'), comprising a second duct (17.1, 17.1') for the outflow of fluid from said at least one container (11, 11', 11") and branched in a fluid-tight manner with respect to said fluid inlet (16.1, 16.1') of said heat collector means (16, 16'),
- electrical pump means (15, 15') for thermal fluid circulation, hydraulically connected with respect to said first hydraulic circuit means (17, 17'),
- second hydraulic circuit means (18, 18'), comprising a duct (18.1, 18.1') for supplying fluid to said at least one container (11, 11', 11"), branched in a fluid-tight manner from said fluid outlet (16.2, 16.2') of said heat collector means (16, 16'),
- electronic temperature probe means (19, 19') associated with said heat collector means (16, 16') and that detect the temperature of the fluid in said heat collector means (16, 16'),
- electrical/electronic means (20, 20') for controlling the operation of said pump means (15, 15'), electrically connected, on one side, with respect to said electronic temperature probe means (19, 19') and, on the other side, with respect to said pump means (15, 15'), so as to determine the operating status of said pump means (15, 15') only when said temperature probe means (19, 19') detect a temperature value above a preset minimum temperature value of the thermal fluid in said heat collector means (16, 16'),
- wherein said solenoid valve control means (V13, V13', 20.1', 20.1"), said thermostat means (14, 14', 14"), said pump means (15, 15'), said temperature probe means (19, 19') and said control means (20, 20') are connected in an electrically powered circuit,
so that the heat generated and dissipated by said at least one heating means (F1, F1') heats the thermal fluid inside said heat collector means (16, 16') and said temperature probe means (19, 19'), when they detect a temperature value above said minimum temperature value, while said solenoid valve control means (V13, V13', 20.1', 20.1") shut off the flow of thermal fluid, determine the operating status of said pump means (15, 15'), which circulate thermal fluid, coming through said first circuit means (17, 17'), from said heat collector means (16, 16') to said at least one storage container (11, 11', 11"), through said second circuit means (18, 18'), until the fluid in said at least one container (11, 11', 11") reaches said predetermined maximum temperature value set in said thermostat means (14, 14', 14"), which cause the opening of said solenoid valve means (V13, V13', 20.1', 20.1"), which enable - through the action of said pump means (15, 15') -- outflow of thermal fluid through said first duct (13, 13') for the outflow of fluid, hydraulically branched towards said consumer (U, U').

7. Cooking stove (F') with heat recovery system (10') according to claim 6, **characterized in that** it comprises:
- a plurality of containers (11', 11") for storing thermal fluid, hydraulically connected in series with one another and, upstream in the direction of flow of the thermal fluid, with respect to said duct (12') for the inflow of fluid coming from a fluid distribution network and, downstream, with respect to said first duct (13') for the outflow of fluid, hydraulically branched toward said fluid consumer (U'),
- said electrical/electronic thermostat means (14', 14"), respectively associated with each of said storage containers (11', 11") and set to react each at a predetermined maximum temperature value of the fluid contained in the corresponding storage container (11', 11"), wherein the maximum temperature value set in said thermostat means (14') associated with the container (11') upstream is lower than the maximum temperature value set in said thermostat means (14") associated with the container (11") downstream,
- said flow control solenoid valve means (V13', 20.1', 20.1"), including a flow diverter solenoid valve (V13') with a fluid inlet and several fluid outlets, hydraulically connected with the inlet (AB) with respect to said second hydraulic circuit means (18') and with each outlet (A, B) to a respective container of said plurality of storage containers (11', 11"), through corresponding supply ducts (20.2', 20.2"), said flow diverter solenoid valve (V13') being electrically connected with respect to said thermostat means (14') associated with the storage container (11') upstream, and also including respective flow shut-off solenoid valves (20.1', 20.1"), one for each of said containers (11', 11"), arranged downstream of said flow diverter valve (V13') and each electrically connected with a respective said thermostat means (14', 14") associated with said storage containers (11', 11"), said flow shut-off solenoid valves (20.1', 20.1") being hydraulically connected, downstream, with respective ducts (20.3', 20.3") for the outflow of fluid from said containers (11', 11"), ducts of which said solenoid valves normally shut off the flow of fluid and that flow into said first duct (13') for the outflow of fluid,
so that, when said pump means (15') circulate fluid, coming through said first circuit means (17'), from said heat collector means (16') through said second circuit means (18'), to said flow diverter solenoid valve (V13') -- while the temperature of the fluid in said containers (11', 11") is below the maximum value set in the respective thermostat means (14', 14") --, said flow diverter valve (V13') first directs, through a first fluid outlet (A), the flow of fluid to the container (11') upstream in said plurality of containers (11', 11"), until the temperature of the fluid in said container upstream (11') exceeds said predetermined maximum temperature value set in the respective thermostat means (14'), which automatically cause the closure of said first outlet (A) and the opening of a second outlet (B) of said diverter solenoid valve (V13'), second outlet (B) that is hydraulically connected with respect to a subsequent container (11") downstream in said plurality of containers (11', 11"), while said thermostat means (14') also cause the opening of the flow shut-off solenoid valve (20.1") through the corresponding duct (20.3") for the outflow of fluid from said first container (11'), and so forth in sequence for each subsequent container of said plurality of containers (11', 11"), downstream in the direction of fluid flow, when the temperature in said subsequent container (11") exceeds said predetermined maximum temperature value set in the respective thermostat means (14").

8. Cooking stove (F') with heat recovery system (10') according to claim 6 and/or 7, **characterized in that** it comprises heat exchanger means (SC) wherein a heat exchange takes place between the thermal fluids circulating in a primary circuit (16', 17') and a secondary circuit (18') **and in that** the heated thermal fluid flows from said secondary circuit (18') to said flow diverter solenoid valve (V13').

9. Cooking stove (F') with heat recovery system (10') according to claim 8, **characterized in that** it comprises relay means (RE) electrically energized by thermocouple means, which keep open the gas duct to the burners (F1') **and in that** said relay means (RE), when energized, activate the electric pumps (15') of said primary circuit with respect to said heat exchanger (SC) and the electric pump means (15") of said secondary circuit with respect to the heat exchanger (SC) respectively.

## Patentansprüche

1. Kochherd (F, F') mit Wärmerückgewinnungsanlage (10, 10') mit mindestens einem Heizmittel (F1, F1'), bestehend aus einem Gasbrenner, einer ausstrahlenden Elektroplatte oder einer Induktionskochplatte zum Kochen von Lebensmitteln, umfassend Wärmekollektormittel (16, S, 16', S'), die mindestens ein Serpentinenmittel (S, S') mit einem wärmeflüssigkeitsdichten Eingang (16.1, 16.1') und Ausgang (16.2, 16.2') umfassen, wobei der Eingang wärmeflüssigkeitsdicht in Bezug auf die ersten Hydraulikkreislauf-Mittel (17, 17.1, 17', 17.1') verbunden ist, und wobei der Ausgang in Bezug auf die zweiten Hydraulikkreislauf-Mittel (18, 18.1, 18', 18.1') verbunden ist, welche hydraulisch verbunden sind in Bezug auf mindestens einen Behälter (11, 11', 11") zur Wärmeflüssigkeitsspeicherung, der seinerseits auf der einen Seite in Bezug auf eine Eingangsleitung (12, 12') der Flüssigkeit, die aus einem Flüssigkeitsverteilungsnetz stammt, hydraulisch verbunden ist, und, auf der anderen Seite in Bezug auf eine erste Ausgangsleitung (13, 13') der Flüssigkeit abgezweigt wird zu einem Flüssigkeitsabnehmer (U, U') durch Elektroventilmittel (V13, V13', 20.1', 20.1") zur Kontrolle des Flüssigkeitsflusses am Ausgang des besagten mindestens einen Behälter (11, 11', 11"),
und umfassend elektrische/elektronische Thermostatmittel (14, 14', 14"), zugeordnet dem besagten mindestens einen Behälter zur Speicherung (11, 11', 11") und elektrisch verbunden in Bezug auf besagte Elektroventile zur Kontrolle (V13, V13', 20.1', 20.1"), **dadurch gekennzeichnet, dass** besagte Thermostatmittel so eingestellt sind, um auf einen vorherbestimmten Temperaturhöchstwert der Flüssigkeit zu reagieren, die in dem besagten mindestens einem Behälter (11, 11', 11") enthalten ist, so dass, wenn die Flüssigkeit in dem besagten mindestens einen Behälter (11, 11', 11") den besagten vorherbestimmten Temperaturhöchstwert erreicht, der auf besagten Thermostatmitteln (14, 14', 14") eingestellt wurde, diese die Öffnung der besagten Elektroventilmittel (V13, V13', 20.1', 20.1") verursachen, die den Abfluss der Wärmeflüssigkeit erlauben durch die besagte erste Ausgangsleitung (13, 13') der Flüssigkeit, die hydraulisch zu dem Flüssigkeitsabnehmer (U, U') abgezweigt wird, wobei besagte Wärmekollektormittel (16, S, 16', S') rund um und mindestens teilweise unterhalb des besagten mindestens einen Heizmittels (F1, F1') des besagten Kochherds (F, F') angeordnet und in einem dichten Behälter (21) enthalten sind, in dem das pneumatische Vakuum gebildet und rund um, beziehungsweise mindestens teilweise unterhalb des mindestens einen Heizmittels (F1, F1') des besagten Kochherds (F, F') angeordnet wird, und **dadurch gekennzeichnet, dass** besagter dichter Behälter (21) ein pneumatisch dichtes externes Gehäuse (22), hergestellt aus einem guten wärmeleitenden Material, und eine Platte zur internen Unterstützung (22.3) umfasst, hergestellt aus isolierendem Material, beziehungsweise wärmereflektierend, worauf besagte Wärmekollektormittel (16, S, 16', S') ruhen.

2. Kochherd (F, F') mit Wärmerückgewinnungsanlage (10, 10') gemäß Anspruch 1, umfassend eine Möbelstruktur (M), in der sich das besagte mindestens eine Heizmittel (F1, F1') oberhalb einer oberen Fläche (P) des besagten Kochherds (F, F') befindet, **dadurch gekennzeichnet, dass** besagte Wärmekollektormittel (16, S, 16', S') in Übereinstimmung mit besagter oberer Fläche (P), beziehungsweise mindestens teilweise unterhalb der besagten oberen Fläche (P) angeordnet sind, **und dadurch gekennzeichnet, dass** der besagte mindestens eine Behälter (11, 11', 11") zur Wärmeflüssigkeitsspeicherung in besagter Möbelstruktur (M) untergebracht ist.

3. Kochherd (F, F') mit Wärmerückgewinnungsanlage (10, 10') gemäß Anspruch 2, **dadurch gekennzeichnet, dass** er mindestens zwei Behälter (11, 11', 11") zur Wärmeflüssigkeitsspeicherung umfasst, die untereinander seriell verbunden und in der besagten Möbelstruktur (M) untergebracht sind.

4. Kochherd (F, F') mit Wärmerückgewinnungsanlage (10, 10') gemäß einem jeglichen der Ansprüche von 1 bis 3, **dadurch gekennzeichnet, dass** besagte Wärmekollektormittel einen flüssigkeitsdichten Behälter umfassen, der einen wärmeflüssigkeitsdichten Eingang und einen Ausgang aufweist und hydraulisch dicht verbunden ist mit seinem Eingang in Bezug auf die besagten ersten Hydraulikkreislauf-Mittel und mit seinem Ausgang in Bezug auf die besagten zweiten Hydraulikkreislauf-Mittel, wobei besagter Behälter mindestens eine flüssigkeitsdichte Öffnung aufweist, die rund um, beziehungsweise unterhalb des besagten mindestens einen Heizmittels des besagten Kochherds angeordnet ist.

5. Kochherd (F') mit Wärmerückgewinnungsanlage (10') gemäß einem jeglichen der vorhergehenden Ansprüche, **dadurch gekennzeichnet, dass** jedes der besagten Serpentinenmittel (S') der besagten Kollektormittel (16') mit einer diesbezüglichen steifen röhrenförmigen Stütze (ST) verbunden ist, die rund um ein entsprechendes Heizmittel (F1') angeordnet ist und eine Stütze für Behälter für zu kochende Lebensmittel auf besagtem Kochherd bildet, und von der Wärmeflüssigkeit der Anlage (10') durchflossen wird.

6. Kochherd (F, F') mit Wärmerückgewinnungsanlage (10, 10') gemäß einem jeglichen der Ansprüche von 1 bis 3, **dadurch gekennzeichnet, dass** er Folgendes umfasst:
- mindestens einen Behälter (11, 11', 11") zur Wärmeflüssigkeitsspeicherung, der auf der einen Seite in Bezug auf eine Eingangsleitung (12, 12') der Flüssigkeit, die aus einem Flüssigkeitsverteilungsnetz stammt, hydraulisch verbunden ist, und, auf der anderen Seite in Bezug auf eine erste Ausgangsleitung (13, 13') der Flüssigkeit hydraulisch abgezweigt wird zu einem Flüssigkeitsabnehmer (U, U') durch Elektroventilmittel (V13, V13', 20.1', 20.1") zur Kontrolle des Flüssigkeitsflusses am Ausgang des besagten mindestens einen Behälters (11, 11', 11"),
- elektrische/elektronische Thermostatmittel (14, 14', 14"), zugeordnet dem besagten mindestens einen Behälter zur Speicherung (11, 11', 11") und elektrisch verbunden in Bezug auf besagte Elektroventile zur Kontrolle (V13, V13', 20.1', 20.1"), wobei besagte Thermostatmittel so eingestellt sind, um auf einen vorherbestimmten Temperaturhöchstwert der Flüssigkeit zu reagieren, die in dem besagten mindestens einen Behälter (11, 11', 11") enthalten ist,
- Wärmekollektormittel (16, 16') mit Wärmeflüssigkeit mit einem Flüssigkeitseingang (16.1, 16.1') und einem Flüssigkeitsausgang (16.2, 16.2'), die in Kontakt miteinander, beziehungsweise in der Nähe des besagten mindestens einen Heizmittels (F1, F1') angeordnet sind,
- erste Hydraulikkreislauf-Mittel (17, 17'), umfassend eine zweite Leitung (17.1, 17.1') zum Ausgang der Flüssigkeit aus dem besagten mindestens einen Behälter (11, 11', 11") und dicht abgezweigt in Bezug auf besagten Eingang (16.1, 16.1') der Flüssigkeit von besagtem Wärmekollektor (16, 16'),
- Elektropumpmittel (15, 15') zum Wärmeflüssigkeitskreislauf, hydraulisch verbunden in Bezug auf die besagten ersten Hydraulikkreislauf-Mittel (17, 17'),
- zweite Hydraulikkreislauf-Mittel (18, 18'), umfassend eine Leitung (18.1, 18.1') zur Einspeisung von Flüssigkeit in den besagten mindestens einen Behälter (11, 11', 11"), dicht abgezweigt von dem besagten Ausgang (16.2, 16.2') der Flüssigkeit von den besagten Wärmekollektormitteln (16, 16'),
- elektronische Mittel mit Temperatursonde (19, 19'), zugeordnet den besagten Wärmekollektormitteln (16, 16'), die die Temperatur der Flüssigkeit in den selbigen besagten Wärmekollektormitteln (16, 16') feststellen,
- elektrische/elektronische Mittel (20, 20') zur Kontrolle der Funktionsfähigkeit der besagten Pumpmittel (15, 15'), elektrisch verbunden auf der einen Seite in Bezug auf die besagten elektronischen Mittel mit Temperatursonde (19, 19') und, auf der anderen, in Bezug auf die besagten Pumpmittel (15, 15'), so dass der Betriebszustand der besagten Pumpmittel (15, 15') nur dann bestimmt wird, wenn besagte Temperatursonde-Mittel (19, 19') einen Temperaturwert feststellen, der höher ist als ein voreingestellter Mindestwert der Wärmeflüssigkeitstemperatur in besagten Wärmekollektormitteln (16, 16'),
- wobei besagte Elektroventilmittel zur Kontrolle (V13, V13', 20.1', 20.1"), besagte Thermostatmittel (14, 14', 14"), besagte Pumpmittel (15, 15'), besagte Temperatursonde-Mittel (19, 19') und besagte Kontrollmittel (20, 20') in einem elektrisch gespeisten Kreislauf verbunden sind,
so dass die Wärme, die von dem besagten mindestens einen Heizmittel (F1, F1') erzeugt und zerstreut wird, die Wärmeflüssigkeit im Inneren der besagten Wärmekollektormittel (16, 16') und der besagten Temperatursonde-Mittel (19, 19') erwärmt, wenn sie einen Temperaturwert feststellen, der höher ist als der besagte Mindesttemperaturwert, während besagte Elektroventilmittel zur Kontrolle (V13, V13', 20.1', 20.1") den Wärmeflüssigkeitsfluss unterbrechen und den Betriebszustand der besagten Pumpmittel (15, 15') bestimmen, die die Wärmeflüssigkeit zirkulieren lassen, kommend durch die besagten ersten Kreislaufmittel (17, 17') von den besagten Wärmekollektormitteln (16, 16') zu dem besagten mindestens einen Behälter zur Speicherung (11, 11', 11"), durch die besagten zweiten Kreislaufmittel (18, 18'), solange bis die Flüssigkeit in dem besagten mindestens einen Behälter (11, 11', 11") den besagten vorherbestimmten Temperaturhöchstwert erreicht, der in den besagten Thermostatmitteln (14, 14', 14") eingestellt wurde, die die Öffnung der besagten Elektroventilmittel (V13, V13', 20.1', 20.1") verursachen, die -- durch die Wirkung der besagten Pumpmittel (15, 15') -- den Abfluss der Wärmeflüssigkeit durch die besagte erste Ausgangsleitung (13, 13') der Flüssigkeit erlauben, die hydraulisch abgezweigt wird zu dem besagten Flüssigkeitsabnehmer (U, U').

7. Kochherd (F') mit Wärmerückgewinnungsanlage (10') gemäß Anspruch 6, **dadurch gekennzeichnet, dass** er Folgendes umfasst:
- eine Mehrzahl von Behältern (11', 11") zur Wärmeflüssigkeitsspeicherung, verbunden untereinander hydraulisch seriell und stromaufwärts in Richtung des Wärmeflüssigkeitsflusses in Bezug auf die besagte Eingangsleitung (12') der Flüssigkeit, stammend aus einem Flüssigkeitsverteilungsnetz und, stromabwärts in Bezug auf die besagte erste Ausgangsleitung (13') der Flüssigkeit, hydraulisch abgezweigt zu dem besagten Flüssigkeitsabnehmer (U'),
- besagte elektrische/elektronische Thermostatmittel (14', 14"), zugeordnet jeweils einem jeden der besagten Behälter zur Speicherung (11', 11") und eingestellt, damit jedes auf einen vorherbestimmten Temperaturhöchstwert der Flüssigkeit reagiert, die im entsprechenden Behälter zur Speicherung (11', 11") eingestellt ist, in dem der Temperaturhöchstwert, der in den besagten Thermostatmitteln (14') eingestellt wurde, die dem Behälter (11') stromaufwärts zugeordnet wurden, niedriger ist als der Temperaturhöchstwert, der in den besagten Thermostatmitteln (14") eingestellt wurde, die dem Behälter (11") stromabwärts zugeordnet wurden,
- besagte Elektroventilmittel zur Kontrolle des Flusses (V13', 20.1', 20.1"), einschließend ein Elektroventil zur Abzweigung des Flusses (V13') mit einem Eingang und mehreren Ausgängen der Flüssigkeit, die hydraulisch verbunden ist mit dem Eingang (AB) in Bezug auf die besagten zweiten Hydraulikkreislauf-Mittel (18') und mit jedem Ausgang (A, B) mit einem entsprechenden Behälter der besagten Mehrzahl von Behältern zur Speicherung (11', 11") durch entsprechende Einspeiseleitungen (20.2', 20.2"), wobei besagtes Elektroventil zur Abzweigung des Flusses (V13') elektrisch verbunden ist in Bezug auf besagte Thermostatmittel (14'), die dem Behälter zur Speicherung (11') stromaufwärts zugeordnet sind, und außerdem entsprechende Elektroventile zur Unterbrechung des Flusses (20.1', 20.1") einschließen, eins für jeden der besagten Behälter (11', 11"), angeordnet stromabwärts des besagten Ventils zur Abzweigung des Flusses (V13') und jedes elektrisch verbunden mit einem entsprechenden der besagten Thermostatmittel (14', 14"), die den besagten Behältern zur Speicherung (11', 11") zugeordnet sind, wobei besagte Elektroventile zur Unterbrechung des Flusses (20.1', 20.1") stromabwärts verbunden sind mit entsprechenden Ausgangsleitungen (20.3', 20.3") der Flüssigkeit aus den besagten Behältern (11', 11"), Leitungen, von denen besagte Elektroventile normalerweise den Flüssigkeitsfluss unterbrechen und die in der besagten ersten Ausgangsleitung (13') der Flüssigkeit münden,
so dass, wenn besagte Pumpmittel (15') Flüssigkeit zirkulieren lassen, kommend durch die ersten Kreislaufmittel (17') aus besagten Wärmekollektormitteln (16') durch besagte zweite Kreislaufmittel (18') bis zum besagten Elektroventil zur Abzweigung des Flusses (V13') -- während die Flüssigkeitstemperatur in den besagten Behältern (11', 11") niedriger ist als der Höchstwert, der in den entsprechenden Thermostatmitteln (14', 14") eingestellt wurde --, besagtes Elektroventil zur Abzweigung des Flusses (V13') zuerst den Flüssigkeitsfluss durch einen ersten Flüssigkeitsausgang (A), zum Behälter (11') stromaufwärts in die besagte Mehrzahl von Behältern (11', 11") so lange leitet, bis die Flüssigkeitstemperatur in dem besagten selbigen stromaufwärts liegenden Behälter (11') den besagten vorherbestimmten Temperaturhöchstwert übersteigt, der in den entsprechenden Thermostatmitteln (14') eingestellt wurde, welche automatisch das Schließen des besagten ersten Ausgangs (A) und das Öffnen eines zweiten Ausgangs (B) des besagten Ventils zur Abzweigung (V13') bestimmen, zweiter Ausgang (B), der hydraulisch verbunden ist in Bezug auf einen darauf folgenden Behälter (11") stromabwärts in der besagten Mehrzahl von Behältern (11', 11"), während besagte selbige Thermostatmittel (14') auch das Öffnen des Elektroventils (20.1") zur Unterbrechung des Flusses durch das entsprechende zur Ausgangsleitung (20.3") von Flüssigkeit aus dem besagten ersten Behälter (11') bestimmen, und so weiter nacheinander für jeden darauf folgenden Behälter von der besagten Mehrzahl von Behältern (11', 11"), die stromabwärts in Richtung des Flusses der Flüssigkeit liegen, wenn die Temperatur in dem besagten darauf folgenden Behälter (11") den besagten vorherbestimmten Temperaturhöchstwert übersteigt, der in den entsprechenden Thermostatmitteln (14") eingestellt wurde.

8. Kochherd (F') mit Wärmerückgewinnungsanlage (10') gemäß Anspruch 6 und/oder 7, **dadurch gekennzeichnet, dass** er Wärmeaustauschmittel (SC) umfasst, in denen ein Wärmeaustausch zwischen den Wärmeflüssigkeiten erfolgt, zirkulierend jeweils in einem primären Kreislauf (16', 17') und in einem sekundären Kreislauf (18'), **und dadurch gekennzeichnet, dass** aus dem besagten sekundären Kreislauf (18') erwärmte Wärmeflüssigkeit bis zu dem besagten Elektroventil zur Abzweigung des Flusses (V13') fließt.

9. Kochherd (F') mit Wärmerückgewinnungsanlage (10') gemäß Anspruch 8, **dadurch gekennzeichnet, dass** er Relaismittel (RE) umfasst, elektrisch erregt durch Thermoelementmittel, die die Leitung des Gases, das zu den besagten Brennern (F1') geleitet wird, offen halten, und **dadurch gekennzeichnet, dass** besagte Relaismittel (RE), wenn erregt, jeweils Elektropumpmittel (15') des besagten primären Kreislaufes in Bezug auf den besagten Austauscher (SC) und Elektropumpmittel (15") des besagten sekundären Kreislaufes in Bezug auf den Austauscher (SC) aktivieren.

## Revendications

1. Cuisinière (F, F') avec système (10, 10') de récupération de chaleur, possédant au moins un moyen de chauffage (F1, F1') composé d'un brûleur à gaz, une plaque électrique rayonnante ou une plaque à induction électrique pour cuire des aliments, comprenant des moyens collecteurs de chaleur (16, S, 16', S'), lesquels comprennent au moins un moyen à serpentin (S, S') possédant une entrée (16.1, 16.1') et une sortie (16.2, 16.2') étanches au fluide thermique, raccordé de manière hydraulique étanche, avec son entrée, par rapport aux premiers moyens du circuit hydraulique (17, 17.1, 17', 17.1') et, avec sa sortie, par rapport aux deuxième moyens du circuit hydraulique (18, 18.1, 18', 18.1'), lesquels sont raccordés de manière hydraulique à au moins un récipient (11, 11', 11") d'accumulation de fluide thermique, à son tour raccordé de manière hydraulique d'une partie par rapport à un conduit (12, 12') d'entrée de fluide provenant d'un réseau de distribution de fluide et, de l'autre partie, par rapport à un premier conduit (13, 13') de sortie de fluide, ramifié de manière hydraulique vers un usager (U, U') de fluide, via des moyens à électrovanne (V13, V13', 20.1', 20.1") de contrôle du débit du fluide en sortie dudit récipient au minimum (11, 11', 11"),
et comprenant des moyens électriques/électroniques à thermostat (14, 14', 14"), associés audit au moins un récipient d'accumulation (11, 11', 11") et raccordés de manière électrique auxdits moyens à électrovanne de contrôle (V13, V13', 20.1', 20.1"), **caractérisée par le fait que** lesdits moyens à thermostat sont configurés pour réagir à une valeur maximum prédéterminée de température du fluide contenu dans ledit au moins un récipient (11, 11', 11"),
de sorte que, lorsque le fluide dans ledit au moins un récipient (11, 11', 11") atteint ladite valeur maximum prédéterminée de température configurée dans lesdites moyens à thermostat (14, 14', 14"), ces derniers entraînent l'ouverture desdits moyens à électrovanne (V13, V13', 20.1', 20.1"), qui permettent l'écoulement de fluide thermique à travers ledit premier conduit (13, 13') de sortie de fluide, ramifié de manière hydraulique vers ledit usager (U, U'), lesdits moyens collecteurs de chaleur (16, S, 16', S') sont disposés autour et, au moins en partie, au-dessous dudit au moins un moyen de chauffage (F1, F1') de ladite cuisinière (F, F') et sont contenus dans un récipient étanche (21), dans lequel est formé le vide pneumatique et disposé autour, respectivement, au moins en partie, au-dessous dudit au moins un moyen de chauffage (F1, F1') de ladite cuisinière (F, F'), et **par le fait que** ledit récipient étanche (21) comprend une coque extérieure (22) à étanchéité pneumatique, réalisée en matériau ayant une bonne conduction thermique, et une plaque de support intérieure (22.3), réalisée en matériau isolant, respectivement réfléchissant thermique, sur laquelle repose lesdits moyens collecteurs de chaleur (16, S, 16', S') .

2. Cuisinière (F, F') avec système (10, 10') de récupération de chaleur selon la revendication 1, comprenant une structure de meuble (M) dans laquelle ledit au moins un moyen de chauffage (F1, F1') s'étend au-dessus d'un plan supérieur (P) de ladite cuisinière (F, F'), **caractérisée par le fait que** lesdits moyens collecteurs de chaleur (16, S, 16', S') sont disposés au niveau dudit plan supérieur (P), respectivement au moins en partie au-dessous dudit plan supérieur (P), **et par le fait que** ledit au moins un récipient (11, 11', 11") d'accumulation de fluide thermique est logé dans ladite structure de meuble (M).

3. Cuisinière (F, F') avec système (10, 10') de récupération de chaleur selon la revendication 2, **caractérisée par le fait qu'**elle comprend au moins deux récipients (11, 11', 11") d'accumulation de fluide thermique reliés entre eux en série et logés dans ladite structure de meuble (M).

4. Cuisinière (F, F') avec système (10, 10') de récupération de chaleur selon l'une quelconque des revendications 1 à 3, **caractérisée par le fait que** lesdits moyens collecteurs de chaleur comprennent un récipient étanche de fluide possédant une entrée et une sortie étanche au fluide thermique et raccordé de manière hydraulique étanche, avec son entrée, par rapport auxdits premiers moyens de circuit hydraulique et, avec sa sortie, par rapport auxdits deuxième moyens de circuit hydraulique, ledit récipient possédant au moins une ouverture étanche au fluide, disposé autour, respectivement au-dessous dudit au moins un moyen de chauffage de ladite cuisinière.

5. Cuisinière (F') avec système (10') de récupération de chaleur selon l'une quelconque des revendications 1 à 3, **caractérisée par le fait que** lesdits moyens à serpentin (S') desdits moyens collecteurs (16') sont raccordés de manière hydraulique chacun à un support tubulaire rigide respectif (ST) disposé autour d'un moyen de chauffage correspondant (F1') et qui forme un support pour récipients d'aliments à cuire sur ladite cuisinière et est parcouru par le fluide thermique du système (10').

6. Cuisinière (F, F') avec système (10, 10') de récupération de chaleur selon l'une quelconque des revendications 1 à 3, **caractérisée par le fait qu'**elle comprend :
- au moins un récipient (11, 11', 11") d'accumulation de fluide thermique raccordé de manière hydraulique, d'une partie, par rapport à un conduit (12, 12') d'entrée de fluide provenant d'un réseau de distribution de fluide et, de l'autre partie, par rapport à un premier conduit (13, 13') de sortie de fluide, ramifié de manière hydraulique vers un usager (U, U') de fluide, via des moyens à électrovanne (V13, V13', 20.1', 20.1") de contrôle du débit du fluide en sortie dudit au moins un récipient (11, 11', 11"),
- des moyens électriques/électroniques à thermostat (14, 14', 14"), associés audit au moins un récipient d'accumulation (11, 11', 11") et raccordé de manière électrique par rapport auxdits moyens à électrovanne de contrôle (V13, V13', 20.1', 20.1"), lesdits moyens à thermostat étant configurés pour réagir à une valeur maximum prédéterminée de température du fluide contenu dans ledit au moins un récipient (11, 11', 11"),
- des moyens collecteurs de chaleur (16, 16') à fluide thermique, possédant une entrée (16.1, 16.1') de fluide et une sortie (16.2, 16.2') de fluide et disposés en contact, respectivement à proximité dudit au moins un moyen de chauffage (F1, F1'),
- des premiers moyens (17, 17') de circuit hydraulique, comprenant un deuxième conduit (17.1, 17.1') de sortie de fluide dudit au moins un récipient (11, 11', 11") et ramifié de manière étanche par rapport à ladite entrée (16.1, 16.1') de fluide desdits moyens collecteurs de chaleur (16, 16'),
- des moyens électriques à pompe (15, 15') de circulation de fluide thermique, raccordés de manière hydraulique par rapport auxdits premiers moyens (17, 17') de circuit hydraulique,
- des deuxièmes moyens (18, 18') de circuit hydraulique, comprenant un conduit (18.1, 18.1') d'alimentation de fluide audit au moins un récipient (11, 11', 11"), ramifié de manière étanche depuis ladite sortie (16.2, 16.2') de fluide desdits moyens collecteurs de chaleur (16, 16'),
- des moyens électroniques à sonde de température (19, 19') associés auxdits moyens collecteurs de chaleur (16, 16') et qui détectent la température du fluide dans lesdits moyens collecteurs de chaleur mêmes (16, 16'),
- des moyens électriques/électroniques (20, 20') de contrôle du fonctionnement desdits moyens à pompe (15, 15'), raccordés de manière électrique, d'une partie, par rapport auxdits moyens électronique à sonde de température (19, 19') et, de l'autre partie, par rapport auxdits moyens à pompe (15, 15'), de manière à déterminer l'état opérationnel desdits moyens à pompe (15, 15') uniquement quand lesdits moyens à sonde de température (19, 19') détectent une valeur de température supérieure à une valeur prédéfinie minimum de température du fluide thermique dans lesdits moyens collecteurs de chaleur (16, 16'),
- où lesdits moyens à électrovanne de contrôle (V13, V13', 20.1', 20.1"), lesdits moyens à thermostat (14, 14', 14"), lesdits moyens à pompe (15, 15'), lesdits moyens à sonde de température (19, 19') et lesdits moyens de contrôle (20, 20') sont raccordés dans un circuit à alimentation électrique,
de sorte que la chaleur générée et dispersée par ledit moyen de chauffage au minimum (F1, F1') réchauffe le fluide thermique à l'intérieur desdits moyens collecteurs de chaleur (16, 16') et desdits moyens (19, 19') à sonde de température, quand ils détectent une valeur de température supérieure à ladite valeur minimum de température, tandis que lesdits moyens à électrovanne de contrôle (V13, V13', 20.1', 20.1") interceptent le débit de fluide thermique, déterminent l'état opérationnel desdits moyens à pompe (15, 15'), qui font circuler le fluide thermique, provenant à travers lesdits premiers moyens de circuit (17, 17'), depuis lesdits moyens collecteurs de chaleur (16, 16') audit récipient d'accumulation au minimum (11, 11', 11"), à travers lesdits deuxièmes moyens de circuit (18, 18'), jusqu'à ce que le fluide dans ledit au moins un récipient (11, 11', 11") atteigne ladite valeur maximum prédéterminée de température configurée dans lesdits moyens à thermostat (14, 14', 14"), qui déterminent l'ouverture desdits moyens à électrovanne (V13, V13', 20.1', 20.1"), qui permettent - via l'action desdits moyens à pompe (15, 15') - l'écoulement de fluide thermique à travers ledit premier conduit (13, 13') de sortie de fluide, ramifié de manière hydraulique vers ledit usager (U, U').

7. Cuisinière (F') avec système (10') de récupération de chaleur selon la revendication 6, **caractérisé par le fait qu'**elle comprend:
- une pluralité de récipients (11', 11") d'accumulation de fluide thermique, raccordés de manière hydraulique en série entre eux et, en amont dans le sens du débit du fluide thermique, par rapport audit conduit (12') d'entrée de fluide provenant d'un réseau de distribution de fluide et, en aval, par rapport audit premier conduit (13') de sortie de fluide, ramifié de manière hydraulique vers ledit usager (U') de fluide,
- lesdits moyens électriques/électroniques à thermostat (14', 14"), associés respectivement à chacun desdits récipients d'accumulation (11', 11") et configurés pour réagir chacun à une valeur maximum prédéterminée de température du fluide contenu dans le récipient d'accumulation correspondant (11', 11"), où la valeur maximum de température configurée dans lesdits moyens à thermostat (14') associés au récipient (11') en amont est inférieure à la valeur maximum de température configurée dans lesdits moyens à thermostat (14") associés au récipient (11") en aval,
- lesdits moyens à électrovanne de contrôle de débit (V13', 20.1', 20.1"), incluant une électrovanne déviatrice de débit (V13') avec une entrée et plusieurs sorties de fluide, raccordée de manière hydraulique avec l'entré (AB) par rapport auxdits deuxième moyens de circuit hydraulique (18') et avec chaque sortie (A, B) à un récipient respectif de ladite pluralité de récipients d'accumulation (11', 11"), via des conduits d'alimentation correspondants (20.2', 20.2"), ladite électrovanne déviatrice de débit (V13') étant raccordée de manière électrique par rapport auxdits moyens à thermostat (14') associés au récipient d'accumulation (11') en amont, et incluant également des électrovannes d'arrêt de débit respectives (20.1', 20.1"), une pour chacun desdits récipients (11', 11"), disposées en aval de ladite vanne déviatrice de débit (V13') et raccordées de manière électrique chacune avec l'un desdits moyens à thermostat respectif (14', 14") associés auxdits récipients d'accumulation (11', 11"), lesdits électrovannes d'arrêt de débit (20.1', 20.1") étant raccordées de manière hydraulique, en aval, à des conduits respectifs (20.3', 20.3") de sortie de fluide depuis lesdits récipients (11', 11"), conduit dont lesdites électrovannes interceptent normalement le débit de fluide et qui débouchent dans ledit premier conduit (13') de sortie de fluide,
de sorte que, lorsque lesdits moyens à pompe (15') font circuler le fluide, provenant à travers lesdits premiers moyens de circuit (17'), desdits moyens collecteurs de chaleur (16') à travers lesdits deuxième moyens de circuit (18'), jusqu'à ladite électrovanne déviatrice de débit (V13') - tandis que la température du fluide dans lesdits récipients (11', 11") est inférieure à la valeur maximum configurée dans les moyens à thermostat respectifs (14', 14") --, ladite vanne déviatrice de débit (V13') dirige d'abord, à travers une première sortie (A) de fluide, le débit de fluide vers le récipient (11') en amont de ladite pluralité de récipients (11', 11"), jusqu'à ce que la température du fluide dans ledit même récipient en amont (11') dépasse ladite valeur maximum prédéterminée de température configurée dans lesdits moyens à thermostat respectifs (14'), lesquels entraînent automatiquement la fermeture de ladite première sortie (A) et l'ouverture d'une deuxième sortie (B) de ladite électrovanne déviatrice (V13'), deuxième sortie (B) qui est raccordée de manière hydraulique par rapport à un récipient suivant (11") en aval dans ladite pluralité de récipients (11', 11"), tandis que lesdits moyens à thermostat (14') entraînent également l'ouverture de l'électrovanne (20.1") d'arrêt de débit à travers le conduit correspondant (20.3") de sortie de fluide dudit premier récipient (11'), et ainsi de suite pour chaque récipient suivant de ladite pluralité de récipients (11', 11"), en aval dans le sens du débit de fluide, quand la température dans ledit récipient suivant (11") dépasse ladite valeur maximum prédéterminée de température configurée dans les moyens à thermostat respectifs (14").

8. Cuisinière (F') avec système (10') de récupération de chaleur selon la revendication 6 et/ou 7, **caractérisée par le fait qu'**elle comprend des moyens à échangeur de chaleur (SC) où a lieu l'échange thermique entre les fluides thermiques circulant respectivement dans un circuit primaire (16', 17') et un circuit secondaire (18') **et par le fait que** dudit circuit secondaire (18') le fluide thermique réchauffé s'écoule jusqu'à ladite électrovanne déviatrice de débit (V13').

9. Cuisinière (F') avec système (10') de récupération de chaleur selon la revendication 8, **caractérisée par le fait qu'**elle comprend des moyens à relais (RE) excités de manière électrique via des moyens à thermocouple, qui maintiennent ouvert le conduit du gaz dirigé vers lesdits brûleurs (F1') **et par le fait que** lesdits moyens à relais (RE), quand ils sont excités, activent respectivement des moyens à pompe électrique (15') dudit circuit primaire par rapport audit échangeur (SC) et des moyens à pompe électrique (15") dudit circuit secondaire par rapport à l'échangeur (SC).
